(19) Europäisches Patentamt
European Patent Office
Office européen des brevets

(11) EP 3 254 872 B1

(12) **EUROPEAN PATENT SPECIFICATION**

(45) Date of publication and mention of the grant of the patent:
**28.11.2018 Bulletin 2018/48**

(51) Int Cl.:
***B60C 11/03*** *(2006.01)*

(21) Application number: **17174475.8**

(22) Date of filing: **06.06.2017**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2016 JP 2016114584**

(43) Date of publication of application:
**13.12.2017 Bulletin 2017/50**

(73) Proprietor: **Sumitomo Rubber Industries, Ltd.**
**Kobe-shi, Hyogo 651-0072 (JP)**

(72) Inventor: **TAKEMOTO, Yoshiaki**
**Kobe-shi,, Hyogo 651-0072, (JP)**

(74) Representative: **TBK**
**Bavariaring 4-6**
**80336 München (DE)**

(56) References cited:
**US-A1- 2008 196 806**

- **A M Pichugin ET AL: "Use of the mechanical loss tangent at different temperatures for assessing the evaluation of tyres", International Polymer Science and Technology, 1 December 2006 (2006-12-01), pages T19-16, XP055409838, Shropshire Retrieved from the Internet: URL:http://www.polymerjournals.com/pdfdownload/985604.pdf**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 254 872 B1

## Description

### Technical Field

The present invention relates to a pneumatic tire in which a high-level balance is achieved among low rolling resistance, wet grip property, and wear resistance.

### Background Art

Patent Literature 1 (Japanese unexamined Patent Application Publication No. 2015-157600) has proposed a pneumatic tire in which a tread portion is divided into four land regions by circumferential main grooves. In this tire, a shoulder land region disposed outermost in a tire axial direction among the four land regions is provided with shoulder lateral grooves whose axially inner end portions terminating in the shoulder land region, and the land regions other than the shoulder land region are provided with only sipes. Thereby, the tire has high tread rigidity and it is possible that the tire exerts excellent steering stability.

Further, besides the steering stability, pneumatic tires are required to have the low rolling resistance from a viewpoint of low-fuel consumption, the wet grip property from a viewpoint of safety, and the wear resistance from a viewpoint of a tire life.

The low rolling resistance and the wet grip property relate to tanδ (loss tangent) of tread rubber. It is known that the low rolling resistance and the wet grip property are in a relationship that the smaller the tanδ at around 30 degrees Celsius is, the lower the rolling resistance is, and the larger the tanδ at around 0 degrees Celsius is, the higher the wet grip property is. Patent Literature 2 (Japanese Unexamined Patent Application Publication No. H11-80433) has disclosed a tread rubber composition consisting of a bromide of polyisobutylene/p-methylstyrene copolymer and a rubber material.

In the present-day tire market, however, there is a demand for further improvement in the wet grip property and the low rolling resistance. In addition, pneumatic tires are required to achieve further improvement in balance between the low rolling resistance and the wet grip property and balance among the foregoing two properties and the wear resistance.

Patent Literature 3 discloses a tyre for a motor vehicle, in particular a high-performance tyre, which is provided with a tread having an overall width. The tread includes first and second circumferential grooves which separate a central region from first and second shoulder regions. The tread includes a circumferential cut in the first shoulder region at a distance from the first circumferential groove; and a plurality of circumferentially repeated transverse groove modules. A first shoulder portion of each transverse groove module includes at least one main transverse groove which includes a first substantially rectilinear portion inclined by a first angle with respect to a radial plane, a second substantially rectilinear portion inclined by a second angle with respect to the radial plane and arranged between the circumferential cut and the first circumferential groove, and a first curve portion connecting the first and the second substantially rectilinear portions.

### Citation List

### Patent Literature

Patent Literature 1: JP 2015-157600 A
Patent Literature 2: JP H11-80433 A
Patent Literature 3: US 2008/196806 A1

### Summary of the Invention

### Problems to be Solved by the Invention

The present invention was made in view of the above, and a primary object thereof is to provide a pneumatic tire in which a high-level balance is achieved among the low rolling resistance, the wet grip property, and the wear resistance.

### Means for Solving the Problem

In one aspect of the present invention, a pneumatic tire comprises a tread portion comprising at least three

circumferential main grooves extending in a tire circumferential direction, at least four land regions divided by the circumferential main grooves and including a pair of shoulder land regions disposed on outermost sides in a tire axial direction, the shoulder land regions being provided with a plurality of shoulder lateral grooves extending laterally, the circumferential main grooves having a groove depth (Hg) not greater than 6.3 mm, the shoulder lateral grooves having deepest
portions with a maximum groove depth at axially inner end portions thereof, a groove depth (Hymax) of the deepest portions being in a range of from 75% to 90% of the groove depth (Hg) and a groove depth (Hye) of the shoulder lateral grooves at a tread ground contacting edge being in a range of from 63% to 85% of the groove depth (Hg), when a tread surface is divided into a pair of shoulder regions located axially outside and a crown region located therebetween by a pair of the circumferential main grooves disposed on the axially outermost sides, the shoulder regions having a land ratio (Ls) smaller than a land ratio (Lc) of the crown region, and the tread surface being formed of a tread rubber in which a ratio tanδ0/tanδ30 between tanδ0 at 0 degree Celsius and tanδ30 at 30 degrees Celsius is not less than 3.75.

In another aspect of the invention, it is preferred that the land regions disposed axially inside the shoulder land regions are provided with no groove having a groove width not less than 1.5 mm but with a sipe having a width smaller than 1.5 mm.

In another aspect of the invention, it is preferred that, when mounted on a vehicle, the shoulder land region located on an axially outer side of the vehicle is provided with a shoulder sipe extending between the shoulder lateral grooves adjacent to each other in the tire circumferential direction, and an adjacent one of the land regions to the shoulder land region is provided with a sipe extending on an extended line of the shoulder sipe.

In another aspect of the invention, it is preferred that the axially inner end portions of the shoulder lateral grooves terminate within the shoulder land regions.

In another aspect of the invention, it is preferred that the land ratio (Lc) is not less than 85%,
a difference (Lc - Ls) between the land ratio (Lc) and the land ratio (Ls) is not less than 10%, and
a land ratio of the entire tread surface is not less than 70%.

In another aspect of the invention, it is preferred that the tread rubber has a rubber hardness (Hs) in a range of from 57 to 67.

Note that the "tread surface" in this invention means a surface of the tread portion of the tire which can contact with the ground when the tire is mounted on a standard rim, inflated to a standard pressure, and loaded with a standard load. Further, the "tread ground contacting edge" means the axially outermost ground contacting position of the tread surface.

Furthermore, the "standard rim" is a wheel rim specified for the concerned tire by a standard included in a standardization system on which the tire is based, for example, the "normal wheel rim" in JATMA, "Design Rim" in TRA, and "Measuring Rim" in ETRTO. The "standard pressure" is air pressure specified for the concerned tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO, and in a case of a tire for a passenger car, the standard pressure is 180 kPa.

The "standard load" is a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

## Advantageous Effects of the invention

According to this invention, by setting the tanδ0 large and the tanδ30 small, the ratio tanδ0/tanδ30 is regulated to be not less than 3.75. Thereby, the low rolling resistance and the wet grip property are improved. However, if the tanδ is too small, the rubber physical properties such as the rubber elasticity and the tensile strength are deteriorated. Therefore, there is a limit to reducing the low rolling resistance only by adjusting the tanδ and it is difficult to improve the low rolling resistance and the wet grip property to the respective target level only by adjusting the rubber composition.

Thereby, in this invention, the circumferential main grooves are formed to have the groove depths not greater than 6.3 mm, which are smaller than the ordinary tires. As the groove depths of the circumferential main grooves are small, tread thickness can be reduced, therefore, it is possible that weight of the tire is reduced. Further, with the tread thickness being smaller than thickness of other tires of a same size, volume of a tire inner cavity is increased, thereby, it is possible that tire support capability is increased, therefore, it is possible that the low rolling resistance is improved in combination with the weight reduction. Owing to improving effect of the low rolling resistance by the circumferential grooves, it is possible that the low rolling resistance can be improved to a high level while securing the rubber physical properties by moderating regulation of the tan δ30 of the tread rubber.

Further in this invention, the tread thickness is reduced, which is disadvantageous to the wear resistance, but the groove depths of the shoulder lateral grooves and the land ratio (Lc) between the shoulder region and the crown

region are optimized and the regulation of the tan δ30 is moderated, therefore, the rubber physical properties are secured. Thereby, it is possible that the wear resistance is increased to a conventional level or even higher, and therefore, it is possible that the low rolling resistance, the wet grip property, and the wear resistance are improved in a good balance at a high level.

## Brief Description of the Drawings

Fig. 1 is a development view of a tread pattern showing an embodiment of a pneumatic tire of the present invention.
Fig. 2 is a cross-sectional view of a tread portion.

## Description of the Preferred Embodiment

An embodiment of the present invention will now be described below in detail.

As shown in Fig. 1, a pneumatic tire 1 in this embodiment includes a tread portion 2 provided with at least three circumferential main grooves 3 extending in a tire circumferential direction and at least four land regions 4 divided by the circumferential main grooves 3.

The circumferential main grooves 3 in this embodiment include three circumferential main grooves, i.e., a crown circumferential main groove 3C extending on a tire equator C and shoulder circumferential main grooves 3S disposed on both sides of the crown circumferential main groove 3C. Accordingly, the tread portion 2 in this embodiment is divided into four land regions 4 including shoulder land regions 4S disposed on both outermost sides in the tire axial direction and two crown land regions 4C disposed between the shoulder land regions 4S.

The shoulder circumferential main grooves 3S and the crown circumferential main groove 3C in this embodiment are formed as straight grooves extending straight in the tire circumferential direction. These straight grooves are preferred in suppressing unstable behavior of a vehicle such as a lurch. However, they may be formed as zigzag grooves (including wavy grooves) or the like instead of the straight grooves.

Groove widths Wgs of the shoulder circumferential main grooves 3S and a groove width wgc of the crown circumferential main groove 3c can be set according to conventions. Note that it is preferred that the groove width wgs is larger than the groove width Wgc from a viewpoint of drainage performance of an entire tread surface.

In the present invention, groove depths Hg of the circumferential main grooves 3 are set to be not greater than 6.3 mm as shown in Fig. 2. specifically, groove depths Hgs of the shoulder circumferential main grooves and a groove depth Hgc of the crown circumferential main groove 3C are set to be not greater than 6.3 mm. In this embodiment, the groove depth Hgc is 6.3 mm and the groove depths Hgs are 6.0 mm, for example, so that the groove depths Hgs are smaller than the groove depth Hgc.

As described above, the groove depths Hg are set to be not greater than 6.3 mm, which is smaller than ordinary tires, and consequently tread thickness T can be reduced, therefore, it is possible that weight of the tire is reduced. Further, with the tread thickness T smaller than thickness of other tires of a same size, volume of a tire inner cavity 1H is increased, therefore, it is possible that tire support capability is increased. Accordingly, the tire 1 has smaller tire deflection during rolling, therefore, iit is possible that the low rolling resistance is improved in combination with the weight reduction.

As shown in Fig. 1, the crown land regions 4C in this embodiment are provided with no groove having a groove width not less than 1.5 mm, but with sipes 11 having widths less than 1.5 mm.

On the other hand, each of the shoulder land regions 4S is provided with a plurality of shoulder lateral grooves 5 extending laterally so as to cross respective one of the shoulder land regions 4S. The shoulder lateral grooves 5 have widths not less than 1.5 mm and extend axially inwardly from outer sides of tread ground contact edges Te. Further, inner end portions 5e of the shoulder lateral grooves 5 terminate within the shoulder land regions 4S.

As shown in Fig. 2, the shoulder lateral grooves 5 have deepest portions, in which groove depths Hy of the shoulder lateral grooves 5 are maximum, in the inner end portions 5e. The groove depth Hy of each of the shoulder lateral grooves 5 in this embodiment gradually decreases from the deepest portion to the one of the tread ground contact edges Te. Groove depths Hymax of the deepest portions are in a range of from 75% to 90% of the groove depths Hg of the circumferential main grooves 3. Further, groove depths Hye of the shoulder lateral grooves 5 at the tread ground contact edges Te are in a range of from 63% to 85% of the groove depths Hg. Note that if the groove depths Hg vary depending on the circumferential main grooves 3 as in this embodiment, the groove depth of the deepest circumferential main groove 3 (the groove depth Hgc of the crown circumferential main groove 3C in this embodiment) is used as the groove depths Hg.

of the shoulder land regions 4S, when the tire 1 is mounted on a vehicle, the shoulder land region 4S positioned on an outer side of the vehicle is provided with shoulder sipes 7 extending axially inwardly from the outer side of the

tread ground contact edge Te between the shoulder lateral grooves 5 adjacent in the tire circumferential direction. Each of the shoulder sipes 7 in this embodiment includes main portion 7A extending almost in parallel with the shoulder lateral grooves 5 and an L-shaped bent portion 7B interposed between the main portion 7A and the shoulder circumferential main groove 3S. Each of the bent portions 7B comprises a first bent portion 7B1 bending from the main portion 7A to one side in the tire circumferential direction and a second bent portion 7B2 connected with the first bent portion 7B1 and having an angle with respect to the tire circumferential direction larger than that of the first bent portion 7B1.

The crown land region 4C positioned on the outer side of the vehicle and adjacent to the shoulder land region 4s on the outer side of the vehicle is provided with sipes 8 extending on extended lines of the shoulder sipes 7. The sipes 8 in this embodiment extend on the extended lines of the second bent portions 7B2.

Further, of the shoulder land regions 4S, when the tire 1 is mounted on a vehicle, the shoulder land region 4S positioned on an inner side of the vehicle is provided with shoulder sipes 9 each extending from the inner end portion 5e of each of the shoulder lateral grooves 5 to the shoulder circumferential main groove 3S. The crown land region 4C on the inner side of the vehicle adjacent to the shoulder land region 4S on the inner side of the vehicle is provided with sipes 10 extending on extended lines of the shoulder sipes 9. Note that the sipes 8 and 10 are included in the sipes 11.

When a tread surface TS is divided by the shoulder circumferential main grooves 3S into a pair of shoulder regions Ys located on the axially outer side and a crown region Yc located therebetween on the axially inner side, a land ratio Ls of the shoulder regions Ys is set to be smaller than a land ratio LC of the crown region Yc. It is preferred that the land ratio LC is not less than 85%, a difference (LC-LS) between the land ratio Lc and the land ratio Ls is not less than 10%, and a land ratio L of the entire tread surface Ts is not less than 70%. Note that the term "land ratio" here refers to a ratio of a virtual ground contacting area of the tread portion 2 having no groove and an actual ground contacting area of the tread portion 2 having the grooves.

Further, in the present invention, it is required that tread rubber 2G forming the tread surface TS satisfies the following expressions (1) and (2):

$$\tan\delta 0/\tan\delta 30 \geq 3.75 \quad \ldots (1)$$

$$67 \geq Hs \geq 57 \quad \ldots (2)$$

The term "tanδ0" in the expression (1) means tanδ of the tread rubber 2G at 0 degree Celsius, and in a strict sense, tanδ obtained at 0 degree Celsius by viscoelastic measurement with an initial strain of 10% and a dynamic strain of 5%. The term "tanδ30" means the tanδ of the tread rubber 2G at 30 degrees Celsius, and in a strict sense, the tanδ obtained at 30 degrees Celsius by viscoelastic measurement with the initial strain of 10% and the dynamic strain of 2%. Further, the term "Hs" in the expression (2) means rubber hardness of the tread rubber 2G, to be exact, a type-A durometer hardness measured at 23 degrees Celsius by a type-A durometer according to Japanese Industrial Standard JIS K6253.

As described above, the tanδ0 is an index of the wet grip property, wherein the larger the value of the tanδ0 is, the better the wet grip property is. Further, the tanδ30 is an index of the rolling resistance, wherein the smaller the value of the tanδ30 is, the smaller the rolling resistance is. The expression (1) can be satisfied by setting the tanδ0 to be large and the tanδ30 to be small. Thereby, by satisfying the expression (1), it is possible that both the low rolling resistance and the wet grip property are achieved at a high level. If the tanδ30 is too small, rubber physical properties such as rubber elasticity and tensile strength are deteriorated. However, the tire 1 in this invention has an effect of improving the low rolling resistance due to the circumferential main grooves 3 being formed with small depths, therefore, there is no need to set the value of the tanδ30 to be significantly low, thereby, it is possible to improve the low rolling resistance to a high level while securing the rubber physical properties.

Further, small depths of the circumferential main grooves 3 are disadvantageous in wear life (wear resistance). However, the groove depths Hy of the shoulder lateral grooves 5, the land ratios LS of the shoulder regions YS, and the land ratio LC of the crown region Yc are regulated as described above, therefore, the uneven wear is suppressed to uniformize the wear. Furthermore, by satisfying the expression (2), necessary rubber hardness is secured, therefore, the tread rubber is less likely to wear. Thereby, the disadvantage in the wear life is overcome, therefore, it is possible that the wear resistance is raised to a conventional level or even higher. That is, it is possible that the low rolling resistance, the wet grip property, and the wear resistance are in a good balance at a high level. Note that securing of the rubber physical properties by relieving the regulation of the tanδ30 can contribute to improvement of the wear resistance.

Note that if the rubber hardness Hs is smaller than 57, the steering stability and the wear resistance become insufficient. In contrast, if the rubber hardness Hs is greater than 67, the wet grip property becomes insufficient. Further, if the ratio of the tanδ0/tanδ30 is smaller than 3.75, either or both of the wet grip property and the low rolling resistance

become insufficient. Furthermore, if the land ratio LC is smaller than 85% and the difference between the land ratios (Lc - LS) is smaller than 10%, a center wear tends to occur. Furthermore, if the land ratio L is smaller than 70%, the tread rigidity is decreased, which is disadvantageous to the steering stability and the wear resistance.

To achieve high-level compatibility between the low rolling resistance and the wet grip property, it is preferred that the tanδ0 and the tanδ30 satisfy the following expressions (3) and (4):

$$\tan\delta 0 \geq 0.60 \quad \ldots (3)$$

$$\tan\delta 30 \leq 0.16 \quad \ldots (4)$$

If the tanδ0 is smaller than 0.60, the wet grip property becomes insufficient, and if the tanδ30 is greater than 0.16, the low rolling resistance becomes insufficient. Note that it is preferred that the lower limit of the tanδ30 is greater than 0.12 from a viewpoint of securing the rubber physical properties.

It is further preferred that the tread rubber 2G satisfies the following expressions (5) to (8):

$$E^*30/\tan\delta 30 \geq 21.88 \quad \ldots (5)$$

$$3.5 \leq E^*30 \leq 6.0 \quad \ldots (6)$$

$$EB \geq 600 \quad \ldots (7)$$

$$TB \times EB \geq 12000 \quad \ldots (8)$$

The term "E*30" in the expressions (5) and (6) means a dynamic modulus of elasticity (unit: MPa) obtained at 30 degrees Celsius by viscoelastic measurement with an initial strain of 10% and a dynamic strain of 2%. The term "EB" in the expressions (7) and (8) means tensile elongation (unit: %) measured according to Japanese industrial Standard JIS K6251. The term "TB" in the expression (8) means tensile strength at break (unit: MPa) measured according to Japanese Industrial Standard JIS K6251.

By satisfying the expression (5), it is possible that the steering stability and the low rolling resistance are favorable. If the E*30/tanδ30 is smaller than 21.88 MPa, the E*30 becomes small, therefore, the steering stability is deteriorated, or the tanδ30 becomes large, therefore, the low rolling resistance is deteriorated.

By satisfying the expression (6), it is possible that the steering stability and the wet grip property are favorable. If the E*30 is smaller than 3.5 MPa, the steering stability becomes deteriorated, and in contrast, if the E*30 is greater than 6.0 MPa, the wet grip property becomes deteriorated.

By satisfying the expression (7), it is possible that excellent fatigue resistance is obtained, therefore, it is possible that durability is secured.

By satisfying the expression (8), excellent breaking strength is obtained.

Note that the value of the tanδ0 can be adjusted mainly by changing kinds and blending amounts of the rubber materials. The value of the tanδ30 can be adjusted mainly by changing the kinds and blending amounts of reinforcing agents (fillers). The value of the E*30 can be adjusted mainly by changing the blending amounts of the reinforcing agents and softeners. The value of EB can be adjusted mainly by changing the blending amounts of the reinforcing agents and the softeners. The value of TB can be adjusted mainly by changing the kinds and the blending amounts of the reinforcing agents and the rubber materials. The value of HS can be adjusted mainly by changing the kinds and the blending amounts of the reinforcing agents (fillers).

Next, a preferred rubber composition for the tread rubber 2G will be described. It is preferred that the rubber materials of the tread rubber 2G (rubber composition) include modified diene rubber interactive with silica. The modified diene rubber includes, for example, terminal-modified diene rubber in which at least one terminal thereof is modified by a compound (modifying agent) having a functional group interactive with silica, main chain-modified diene rubber having the functional group on the main chain thereof, main chain and terminal-modified diene rubber having the functional group at the main chain and the terminal thereof (for example, main chain and terminal-modified diene rubber in which the main chain has the functional group and at least one terminal is modified with the modifying agent), a terminal-modified diene rubber that is modified (coupled) with a polyfunctional compound having two or more epoxy groups per molecule so that hydroxyl groups and epoxy groups are introduced, or the like. By using such modified diene rubber, the low rolling resistance, the wet grip property, and the wear resistance are favorable. Note that one kind of the modified diene rubbers may be used singly or two or more kinds of them may be used in combination.

The functional group may be, for example, an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imido group, a hydrazo group, an azo group, a diazo group, a carboxyl group, a nitrile group, pyridyl group, an alkoxy group, hydroxyl group, an oxy group, an epoxy group, or the like. Note that these functional groups may have a substituent group. Among them, an alkoxy group (preferably a 1-6C alkoxy group), an amino group (preferably an amino group in which hydrogen atoms are substituted with a 1-6C alkyl group), an alkoxysilyl group (preferably a 1-6C alkoxysilyl group), a hydroxyl group, and an epoxy group for especially high effectiveness in improving the low rolling resistance and the wet grip property.

The diene rubber into which the above-mentioned functional groups are introduced (a polymer constituting a skeleton of the modified diene rubber described above) includes natural rubber (NR), isoprene rubber (IR), butadiene rubber (BR), styrene-butadiene rubber (SBR), styrene-isoprene-butadiene rubber (SIBR), ethylene-propylene-diene rubber (EPDM), chloroprene rubber (CR), acrylonitrile-butadiene rubber (NBR), or the like. Among them, IR, BR, and SBR are preferable, and BR and SBR are more preferable. In particular, SBR is preferable because the low rolling property and the wet grip property are obtained in a good balance.

There is no particular limitation on the IR and, for a widely-used material in tire industry such as IR2200 available from JSR Corporation or IR2200 available from Zeon Corporation can be used, for example.

There is no particular limitation on the BR and, for example, BR with high cis content (for example, cis content of 90 mass% or more) such as BR1220 available from Zeon Corporation, or BR130B or BR150B available from ube Industries, Ltd., and BR containing syndiotactic polybutadiene crystal such as VCR412 or VCR617 available from Ube industries, Ltd. can be used.

There is no particular limitation on the SBR and, for emulsion-polymerized styrene-butadiene rubber (E-SBR), solution-polymerized styrene-butadiene rubber (S-SBR), or the like can be used.

In the case of using modified SBR as the modified diene rubber, modified SBR modified with a compound expressed the following chemical formula (I) disclosed in Japanese unexamined Patent Application Publication No. 2010-111753 can be preferably used. Specifically, E15 available from Asahi Kasei chemicals Corporation or the like can be used, for example.

[Chemical Formula 1]

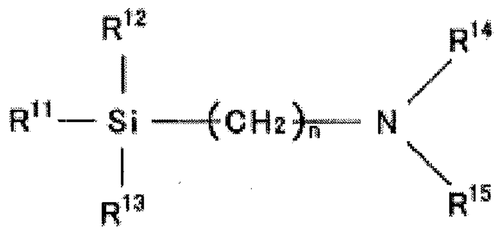 ···(I)

In the chemical formula (I), the terms "$R^{11}$", "$R^{12}$", and "$R^{13}$" represent identically or differently an alkyl group, an alkoxy group (preferably 1-8C, more preferably 1-4C alkoxy group), a silyloxy group, an acetal group, a carboxyl group (-COOH), a mercapto group (-SH), or derivatives of these. The terms "$R^{14}$" and "$R^{15}$" represent identically or differently a hydrogen atom or an alkyl group (preferably 1-4C alxyl group), and "n" represents an integer (preferably 1 to 5, more preferably 2 to 4, and still more preferably 3).

It is preferred that at least one of $R^{11}$, $R^{12}$, and $R^{13}$ represents a 1-4C alkoxy group, and $R^{14}$ and $R^{15}$ represent a hydrogen atom and a 1-4C alkyl group. Thereby, excellent processability and wear resistance are obtained.

Specific examples of a compound expressed by the chemical formula (I) are 3-aminopropyltrimethoxysilane, 3-aminopropyltriethoxysilane, 3-aminopropyldimethylmethoxysilane, 3-aminopropyldimethylethoxysilane, 3-aminopropylmethyldimethoxysilane, 2-dimethylaminoethyl trimethoxysilane, 3-diethylaminopropyltrimethoxysilane, 3-dimethylaminopropyltrimethoxysilane, and the like. They may be singly used or two or more kinds of them may be used in combination.

As a method for modifying SBR with the compound (modifying agent) expressed in the chemical formula (I), any one of publicly known conventional methods such as those disclosed in Japanese Examined Patent Application Publication No. H6-53768, Japanese Examined Patent Application Publication No. H6-57767, and Japanese unexamined

Patent Application Publication No. 2003-514078 can be used. For example, styrene-butadiene rubber can be modified by contact with a modifying agent. Specifically, after preparation of styrene-butadiene rubber by anionic polymerization, a predetermined amount of modifying agent is added to the rubber solution to allow the polymerized terminal (active terminal) of the styrene-butadiene rubber to interact with the modifying agent.

The vinyl content in the modified SBR is preferably not less than 10 mass%, more preferably not less than 20 mass%, still more preferably not less than 30 mass%. If the vinyl content is less than 10 mass%, it is possible that the wet grip property is insufficient. The vinyl content is preferably not greater than 90 mass%, more preferably not greater than 80 mass%, still more preferably not greater than 70 mass%. If the vinyl content is greater than 90 mass%, it is possible that the strength is deteriorated. Note that the vinyl content (1,2-bound butadiene unit amount) in the SBR in this specification can be measured by infrared absorption spectrometry.

The styrene content in the modified SBR is preferably not less than 5 mass%, more preferably not less than 10 mass%, still more preferably not less than 20 mass%. If the styrene content is less than 5 mass%, it is possible that the wet grip property is insufficient. The styrene content is preferably not greater than 70 mass%, more preferably not greater than 60 mass%, still more preferably not greater than 50 mass%. If the styrene content is greater than 70 mass%, it is possible that the processability is deteriorated. Note that the styrene content in the SBR in this specification is calculated according to H1-NMR measurement.

The glass transition temperature (Tg) of the modified SBR is preferably not lower than -45 degrees Celsius, more preferably not lower than -40 degrees Celsius or more, still more preferably not lower than -35 degrees Celsius. The glass transition temperature is preferably not higher than 10 degrees Celsius, more preferably not higher than 5 degrees Celsius, and still more preferably not higher than 0 degree Celsius. Note that the glass transition temperature of the SBR in this specification is measured by performing differential scanning calorimetry (DSC) at a rate of temperature rise of 10 degrees Celsius/minute according to Japanese Industrial Standard JIS K7121.

The content of the modified diene rubber in the rubber materials of 100 mass% is preferably not less than 40 mass%, more preferably not less than 50 mass%, still more preferably not less than 60 mass%, and in particular preferably not less than 70 mass%. If the content is less than 40 mass%, it is possible that the wet grip property is deteriorated. The content of the modified diene rubber may be 100 mass% but is preferably not greater than 95 mass%, more preferably not greater than 90 mass%, still more preferably not greater than 85 mass%. If the content is greater than 95 mass%, it is possible that the low rolling resistance and the wear resistance are deteriorated.

The rubber materials usable for the tread rubber 2G other than the above-mentioned modified diene rubber are not particularly limited but may be diene rubbers such as isoprene rubber (IR), butadiene rubber (BR), styrene-butadliene rubber (SBR), styrene-isoprene-butadiene rubber (SIBR), ethylene-propylene-diene rubber (EPDM), chloroprene rubber (CR), acrylonitrile-butadiene rubber (NBR), butyl rubber (IIR), natural rubber (NR), and epoxidized natural rubber (ENR). These diene rubbers may be used singly or two or more kinds of them may be used in combination. Among them, BR, NR, and SBR are preferable, BR and NR are more preferable, and BR is in particular preferable because the low rolling resistance, the wet grip property, and the wear resistance are obtained in a good balance.

There is no particular limitation on the BR and, for example, BR with high cis content such as BR1220 available from zeon Corporation, or BR130B or BR150B available from Ube industries, Ltd., and a BR containing syndiotactic polybutadiene crystal such as VCR412 or VCR617 available from Ube Industries, Ltd. can be used. Among them, the cis content of the BR is preferably not less than 90 mass% and more preferably not less than 95 mass% because the low rolling resistance and the wear resistance are favorable. Note that the cis content in the BR can be measured by infrared absorption spectrometry.

In a case of using the BR as a rubber material, the content of the BR in the rubber materials of 100 mass% is preferably not less than 5 mass%, more preferably not less than 10 mass%, still more preferably not less than 15 mass%. The content of the BR is preferably not greater than 60 mass%, more preferably not greater than 40 mass%. By setting the content of the BR within the above ranges, it is possible that the wear resistance is improved significantly.

There is no particular limitation on the NR and, for example, a widely-used material in the tire industry such as SIR20, RSS#3, TSR20, deproteinized natural rubber (DPNR), or high purity natural rubber (HPNR) can also be used.

In a case of using the NR as a rubber material, the content of the NR in the rubber materials of 100 mass% is preferably not less than 10 mass%, more preferably not less than 20 mass%. The content of the NR is preferably not greater than 60 mass%, more preferably not greater than 40 mass%. By setting the content of the NR within the above ranges, it is possible that the wear resistance is improved significantly.

There is no particular limitation on the SBR and, for example, emulsion-polymerized styrene-butadiene rubber (E-SBR), solution-polymerized styrene-butadiene rubber (S-SBR), or the like can be used.

In a case of using the SBR as a rubber material, the content of the SBR in the rubber materials of 100 mass% is preferably not less than 5 mass%, more preferably not less than 10 mass%, still more preferably not less than 20 mass%. The content of the SBR is preferably not greater than 60 mass%, more preferably not greater than 40 mass%. By setting the content of the SBR within the above ranges, it is possible that the wear resistance is improved significantly.

It is preferred that the rubber composition contains at least one kind of silica. By blending the silica with the

modified diene rubber, it is possible that excellent low rolling resistance and rubber strength (the fatigue resistance and the breaking strength) are obtained. There is no particular limitation on the silica but dry-process silica (anhydrous silicic acid), wet-process silica (hydrous silicic acid), or the like can be used, for example. The wet-process silica is preferable because it has a lot of silanol groups.

The nitrogen absorption specific surface area (N2SA) of the silica is preferably not less than $40m^2/g$, more preferably not less than $50m^2/g$. If the N2SA is less than $40m^2/g$, the breaking strength after vulcanization tends to be decreased. Further, the N2SA of the silica is preferably not greater than $250m^2/g$, more preferably not greater than $200m^2/g$. If the N2SA of the silica is greater than $250m^2/g$, the low rolling resistance and the rubber processability tend to be deteriorated. Note that the nitrogen absorption specific surface area of the silica is measured by BET method according to ASTMD3037-93.

The content of the silica with respect to 100 parts by mass of the rubber materials is preferably not less than 20 parts by mass, more preferably not less than 25 parts by mass, still more preferably not less than 45 parts by mass. If the content of the silica is less than 20 parts by mass, the effect of blending the silica tends to be insufficient. The content of the silica is preferably not greater than 150 parts by mass, more preferably not greater than 120 parts by mass, still more preferably not greater than 100 parts by mass. If the content of the silica is greater than 150 parts by mass, it is difficult to disperse the silica in the rubber, therefore, the processability of the rubber tends to be deteriorated.

In a case of containing the silica, it is preferred that the rubber composition contains a silane coupling agent as well. As the silane coupling agent, any conventional silane coupling agent can be used in combination with silica, for example, sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 2-trimethoxysilylethyl-N,N-dimethylthiocarbamoyltetrasulfide, 3-trimethoxysilylpropylbenzothiazolyltetrasulfide, 3-triethoxysilylpropylbenzothiazoletetrasulfide, 3-triethoxysilylpropylmethacrylatemonosulfide, and 3-trimethoxysilylpropylmethacrylatemonosulfide, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and 3-octanoylthio-1-propyltriethoxysilane, vinyl-based silane coupling agents such as vinyltriethoxysilane or vinyltrimethoxysilane, amino-based silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimelthoxysilane, glycidoxy-based silane coupling agents such as γ-glycidoxypropyltriethoxysilane, γ-glycidoxypropyltrimethoxysilane, γ-glycidoxypropylmethyldiethoxysilane, or γ-glycidoxypropylmethyldimethoxysilane, nitro-based silane coupling agents such as 3-nitropropyltrimethoxysilane and 3-nitropropyltriethoxysilane, chloro-based silane coupling agents such as 3-chloropropyltrimethoxysilane, 3-chloropropyltriethoxysilane, 2-chloroethyltrimethioxysilane, and 2-chloroethyltriethoxysilane, and so on. As product names, Si69, si75, and si363 (available from Degussa-Hüls AG), NXT, NXT-LV, NXTULV, and NXT-Z (available from Momentive Performance Materials Inc.), and so on can be used. Among them, mercapto-based silane coupling agents are preferable because excellent low rolling resistance can be obtained. One kind of these silane coupling agents may be singly used or two or more kinds of them may be used in combination.

In a case of blending a silane coupling agent into the rubber composition, the content of the silane coupling agent with respect to 100 parts by mass of silica is preferably not less than 0.5 part by mass, more preferably not less than 1.5 parts by mass, still more preferably not less than 2.5 parts by mass, in particular preferably not less than 5 parts by mass. If the content of the silane coupling agent is less than 0.5 part by mass, it is possible that the silica is difficult to disperse in a favorable manner. The content of the silane coupling agent is preferably not greater than 25 parts by mass, more preferably not greater than 20 parts by mass, still more preferably not greater than 15 parts by mass. Even if a silane coupling agent of more than 25 parts by mass is blended, the effect of improving dispersion of the silica cannot be obtained, therefore, cost tends to increase unnecessarily. Further, the scorch time becomes short, therefore, the processability in kneading and extrusion tends to deteriorate.

The rubber composition may contain a filler such as calcium carbonate, talc, alumina, clay, aluminum hydroxide, mica, and the like in addition to silica. Among them, aluminum hydroxide is preferred because of high-level compatibility between the low rolling resistance and the wet grip property. That is, in the present invention, it is preferred that silica and aluminum hydroxide are used in combination. Thereby, while the low rolling resistance and the wet grip property being improved in a good balance, the wear resistance, the steering stability, and the rubber strength (the fatigue resistance and the breaking strength) can be improved as well. Note that the aluminum hydroxide in this specification refers to Al(OH)3 or Al2O3·3H2O. One kind of these fillers may be used singly or two or more kinds of them may be used in combination.

The average particle size of the aluminum hydroxide is preferably not greater than 10 μm, more preferably not greater than 5 μm, still more preferably not greater than 3 μm. If the average particle size of the aluminum hydroxide is greater than 10 μm, it is possible that favorable wet grip property is not obtained. The average particle size of the aluminum hydroxide is preferably not less than 0.05 μm, more preferably not less than 0.1 μm. If the average particle size of the aluminum hydroxide is less than 0.05 μm, it is difficult to disperse the aluminum hydroxide, therefore, it is possible that the wet grip property is deteriorated.

Note that the average particle size of the aluminum hydroxide is measured by a transmission electron microscope or a scanning electron microscope. The average particle size means a long diameter. The long diameter means a maximum length of the aluminum hydroxide powder projected onto a projection surface from various directions.

In a case of blending aluminum hydroxide into the rubber composition, the content of the aluminum hydroxide with respect to 100 parts by mass of the rubber materials is preferably not less than 1 part by mass, more preferably not less than 5 parts by mass. If the content of the aluminum hydroxide is less than 1 part by mass, it is possible that the effect of improving the wet grip property is small. Further, the content: of the aluminum hydroxide is preferably not greater than 75 parts by mass, more preferably not greater than 50 parts by mass, still more preferably not greater than 30 parts by mass, in particular preferably not greater than 20 parts by mass. If the content of the aluminum hydroxide is greater than 75 parts by mass, the aluminum hydroxide may be poorly dispersed, therefore, it is possible that the wear resistance is deteriorated.

In a case of blending aluminum hydroxide into the rubber composition, mass ratio of the aluminum hydroxide and the silica (aluminum hydroxide (parts by mass)/silica (parts by mass)) is preferably less than 0.3, more preferably not greater than 0.28, and still more preferably not less than 0.25. By setting the mass ratio of the aluminum hydroxide and the silica within the ranges, it is possible that the low rolling resistance and the wear resistance are improved in a particularly good balance. A minimum of the mass ratio of the aluminum hydroxide and the silica (aluminum hydroxide (parts by mass)/silica (parts by mass)) is not particularly limited, but is preferably not less than 0.01, more preferably not less than 0.10, still more preferably not less than 0.15.

The rubber composition may be blended with carbon black. Thereby, it is possible that the rubber strength is improved. As the carbon black, GPF, FEF, HAF, ISAF, SAF, and the like, can be used but not limited to them. These carbon blacks may be used singly or two or more kinds of them may be used in combination.

The nitrogen absorption specific surface area (N2SA) of the carbon black is preferably not less than 10 $m^2/g$, more preferably not less than 20 $m^2/g$, still more preferably not less than 70 $m^2/g$. Further, the N2SA is preferably not greater than 200 $m^2/g$, more preferably not greater than 150 $m^2/g$, still more preferably not greater than 140 $m^2/g$. If the nitrogen absorption specific surface area is less than 10 $m^2/g$, it is possible that the sufficient reinforcing effect is not obtained. If the nitrogen absorption specific surface area is greater than 200 $m^2/g$, the low rolling resistance tends to be deteriorated. Note that the nitrogen absorption specific surface area of the carbon black is determined by method A of Japanese Industrial Standard JISK6217.

In a case of blending a carbon black into the rubber composition, the content of the carbon black with respect to 100 parts by mass of the rubber materials is preferably not less than 1 part by mass, more preferably not less than 3 parts by mass. Further, the content of the carbon black is preferably not greater than 20 parts by mass, more preferably not greater than 15 parts by mass. By setting the blending amount of the carbon black within the above ranges, it is possible that weather resistance, antistatic performance, and the rubber strength are improved. If the content of the carbon black is less than 1 part by mass, the reinforcement tends to be insufficient. Further, if the content of the carbon black is greater than 20 parts by mass, it is possible that the low rolling resistance is deteriorated.

Besides the above ingredients, the rubber composition may be suitably blended with compounding agents generally used in the tire industry, for a softener such as oil, aromatic petroleum resin, wax, various anti-aging agents, stearic acid, zinc oxide, a processing aid, a vulcanizing agent such as sulfur, and a vulcanization accelerator.

There is no particular limitation on the softeners usable in the rubber composition and, for example, oils such as aromatic mineral oil (with a viscosity-gravity constant (V.G.C.) in a range of from 0.900 to 1.049), naphthenic mineral oil (with the V.G.C. in a range of from 0.850 to 0.899), and paraffinic mineral oil (with the V.G.C. in a range of from 0.790 to 0.849) can be used. The polycyclic aromatic content in the oil is preferably less than 3 mass%, more preferably less than 1 mass%. The polycyclic aromatic content is measured according to Institute of Petroleum method 346/92. Further, it is preferred that the content of aromatic compounds (CA) in the oil is not less than 20 mass%. Furthermore, as the softener, liquid polymers (liquid diene polymers), liquid resin, plant oils, ester plasticizers, and the like can be used. These softeners may be used singly or two or more kinds of them may be used in combination.

In a case of blending the softener into the rubber composition, the content of the softener with respect to 100 parts by mass of the rubber materials is preferably not less than 1 part by mass, more preferably not less than 5 parts by mass, still more preferably not less than 10 parts by mass, because advantage of the present invention can be obtained more favorably. Further, the content of the softener with respect to 100 parts by mass of the rubber materials is preferably not greater than 40 parts by mass, more preferably not greater than 35 parts by mass, still more preferably not greater than 30 parts by mass.

It is preferred that the rubber composition contains aromatic petroleum resin. The aromatic petroleum resin may be phenolic resin, coumarone - indene resin, styrene resin, rosin resin, DCPD resin, or the like. One kind of these aromatic petroleum resins may be used singly, or two or more kinds of them may be used in combination. Among them, styrene resin is preferable, and aromatic vinyl polymer obtained by polymerizing $\alpha$-methylstyrene and/or styrene is more preferable.

For the aromatic vinyl polymer, styrene and $\alpha$-methylstyrene are used as an aromatic vinyl monomer (unit). The aromatic vinyl polymer can be either homopolymer of each of the monomers or copolymer of both of the monomers. As the aromatic vinyl polymer, a homopolymer of $\alpha$-methylstyrene or a copolymer of $\alpha$-methylstyrene and styrene is preferable in terms of cost, processability, and the wet grip property.

A softening point of the aromatic petroleum resin is preferably not less than 70 degrees Celsius, more preferably not less than 80 degrees Celsius, If the softening point is less than 70 degrees Celsius, the wet grip property tends to be deteriorated. Further, the softening point is preferably not greater than 140 degrees Celsius, more preferably not greater than 120 degrees Celsius, still more preferably not greater than 100 degrees Celsius. If the softening point is greater than 140 degrees Celsius, the wear resistance and the wet grip property tend to be deteriorated. Note that the softening point of the aromatic petroleum resin is measured by a ring and ball softening point measuring device, as a temperature at which the ball drops, as defined in Japanese Industrial Standard JIS K6220-1:2001.

A weight-average molecular weight (Mw) of the aromatic petroleum resin is preferably not less than 500, more preferably not less than 800. If the weight-average molecular weight of the aromatic petroleum resin is less than 500, the effect of improving the wet grip property tends to be obtained insufficiently. Further, the weight-average molecular weight of the aromatic petroleum resin is preferably not greater than 3000, more preferably not greater than 2000. If the weight-average molecular weight of the aromatic petroleum resin is greater than 3000, the wear resistance tends to be deteriorated. Note that the weight-average molecular weight (Mw) of the aromatic petroleum resin is determined by converting the value measured by gel permeation chromatograph (GPC) (GPC: GPC-8000 series available from Tosoh corporation, detector: differential refractometer, column: TSKGELSUPERMALTPORE HZ-M available from Tosoh Corporation) into a standard polystyrene molecular weight.

In a case of blending the aromatic petroleum resin into the rubber composition, the content of the aromatic petroleum resin with respect to 100 parts by mass of the rubber materials is preferably not less than 2 parts by mass, more preferably not less than 5 parts by mass, still more preferably not less than 7 parts by mass. If the content of the aromatic petroleum resin is less than 2 parts by mass, it is possible that the effect of improving the wet grip property is not obtained sufficiently. Further, the content of the aromatic petroleum resin is preferably not greater than 25 parts by mass, more preferably not greater than 20 parts by mass. If the content of the aromatic petroleum resin is greater than 25 parts by mass, it is possible that the wet grip property is not sufficient. In addition, the temperature dependency is increased, therefore, characteristics changes more greatly as temperature changes, thereby, thermal stability tends to be deteriorated, for example.

There is no particular limitation on the anti-aging agents usable in the rubber composition and, for example, naphthylamine-based, quinoline-based, diphenylamine-based, p-phenylenediamine-based, hydroquinone derivatives, phenol-based (monophenol-based, bisphenol-based, trisphenol-based, polyphenol-based), thiobisphenol-based, benzoimidazole-based, thiourea-based, phosphorous acid-based, and organic thioacid-based anti-aging agents, etc. can be used.

The naphthylamine-based anti-aging agent includes phenyl-$\alpha$-naphthylamine, phenyl-$\beta$-naphthylamine, aldol-$\alpha$-trimethyl-1,2-naphthylamine, and the like.

The quinoline-based anti-aging agent includes 2,2,4-trimethyl-1,2-dihydroquinoline polymer, 6-ethoxy-2,2,4-trimethyl-1,2-dihydroquinoline, and the like.

The diphenylamine-based anti-aging agent includes p-isopropoxydiphenylamine, p-(p-toluenesulfonylamide)-diphenylamine, N,N-diphenylethylenediamine, octylated diphenylamine, and the like.

The p-phenylenediamine-based anti-aging agent includes N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bi s(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, phenyloctyl-p-phenylenediamine, and the like.

The hydroquinone derivative anti-aging agent includes 2,5-di-(tert-amyl)hydroquinone, 2,5-di-tert-butyl hydroquinone, and the like.

with regard to the phenol-based anti-aging agent, the monophenol-based anti-aging agent includes 2,6-di-tert-butyl-4-methylphenol, 2,6-di-tert-butyl-4-ethylphenol, 2,6-di-tertbutylphenol, 1-oxy-3-methyl-4-isopropylbenzene, butylhydroxyanisole, 2,4-dimethyl-6-tert-butylphenol, n-octadecyl-3-(4'-hydroxy-3',5'-di-tert-butylphenyl)propionate, styrenated phenol, and the like. The bisphenol-based, the trisphenol-based, and the polyphenol-based anti-aging agents include 2,2'-methylene-bis-(4-methyl-6-tert-butylphenol), 2,2'-methylene-bis-(4-ethyl-6-tert-butylphenol), 4,4'-butylidene-bis-(3-methyl-6-tert-butylphenol), 1,1'-bis-(4-hydroxyphenyl)-cyclohexane, tetrakis-[methylene-3-(3',5'-di-tert-butyl-4'-hydroxyphenyl)propionate]methane, and the like.

The thiobisphenol-based anti-aging agent includes 4,4'-thiobis-(6-tert-butyl-3-methylphenol), 2,2'-thiobis-(6-tert-butyl-4-methylphenol), and the like. The benzo imidazole-based anti-aging agent includes 2-mercaptomethylbenzoimidazole and the like. The thiourea-based anti-aging agent includes tributylthiourea and the like. The phosphorous acid-based anti-aging agent includes tris(nonylphenyl)phosphite and the like. The organic thioacid-based anti-aging agent includes dilauryl thiodipropionate and the like. These anti-aging agents may be used singly or two or more kinds of them may be used in combination.

Among them, it is preferred that the quinoline-based anti-aging agent and the p-phenylenediamine-basedl anti-aging agent are used in combination. Further, in a case of blending the anti-aging agent into the rubber composition, the content of the anti-aging agent (in a case of using two or more kinds of anti-aging agents, total content of them) with respect to 100 parts by mass of the rubber materials is preferably in a range of from 1 to 10 parts by mass, more preferably in a range of from 3 to 7 parts by mass.

It is preferred that the rubber composition contains zinc oxide. Thereby, vulcanization becomes smooth, therefore, isotropy of the rigidity and physical properties is obtained. There is no particular limitation on zinc oxide and the zinc oxide conventionally used in the rubber industry (such as Ginrei R available from Toho zinc Co., Ltd., the zinc oxide available from Mitsui Mining & Smelting Co., Ltd., and the like), the zinc oxide particles having an average particle size not greater than 200 nm (such as zincox Super F-2 available from Hakusuitech Co., Ltd. and the like), etc. can be used. One kind of these zinc oxides may be used singly or two or more kinds of them may be used in combination.

In a case of blending the zinc oxide into the rubber composition, the content of the zinc oxide with respect to 100 parts by mass of the rubber materials is preferably not less than 1.0 part by mass, more preferably not less than 1.5 parts by mass. If the content of the zinc oxide is less than 1.0 part by mass, it is possible that sufficient hardness (Hs) is not obtained due to reversion. The content of the zinc oxide is preferably not greater than 3.7 parts by mass, more preferably not greater than 3.0 parts by mass. If the content of the zinc oxide is greater than 3.7 parts by mass, it is possible that the breaking strength is likely to be deteriorated.

There is no particular limitation on the vulcanizing agent, and sulfur, alkylphenol-sulfur chloride condensate, or the like can be favorably used, and especially sulfur is preferred. One kind of these vulcanizing agents can be used singly or two or more kinds of them can be used in combination.

The content of the vulcanizing agent with respect to 100 parts by mass of the rubber materials is preferably not less than 0.1 part by mass, more preferably not less than 0.3 part by mass. The content of the vulcanizing agent is preferably not greater than 7 parts by mass, more preferably not greater than 5 parts by mass. By adjusting the content within the above ranges, it is possible that the advantage of the present invention is obtained in a more favorable manner.

The vulcanization accelerator may be sulfenamide-based, thiazole-based, thiuram-based, thiourea-based, guanidine-based, dithiocarbamine-based, aldehyde-amine-based, aldehyde-ammonia-based, imidazoline-based, or xanthate-based vulcanization accelerator, or the like. These vulcanization accelerators may be used singly or two or more kinds of them may be used in combination. Among them, the sulfenamide-based and guanidine-based vulcanization accelerators are preferable, and the combination of the sulfenamide-based vulcanization accelerator and the guanidine-based vulcanization accelerator is more preferable because the advantage of the present invention is obtained in a more favorable manner.

The sulfenamide-based vulcanization accelerator includes, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like.

The guanidine-based vulcanization accelerator includes, for example, diphenylguanidine, diorthotolylguanidine, orthotolylguanidine, and the like.

The content of the vulcanization accelerator (in a case of using two or more kinds of the vulcanization accelerators, the total content of them) with respect to 100 parts by mass of the rubber materials is preferably not less than 0.1 part by mass, more preferably not less than 0.5 part by mass, still more preferably not less than 1 part by mass. The content of the vulcanization accelerator is preferably not greater than 10 parts by mass, more preferably not greater than 8 parts by mass, still more preferably not greater than 6 parts by mass.

The pneumatic tire of the present invention is preferably used as a tire for a passenger car, a truck/bus, a motorcycle, and as a racing tire, etc. and is particularly preferably used as a tire for a passenger car.

while detailed description has been made of the particularly preferable embodiment of the present invention, the present invention can be embodied in various forms without being limited to the illustrated embodiment.

working Example (Example)

Pneumatic tires of size 195/65R15 having a basic tread pattern shown in Fig. 1 were made by way of test according to the specification listed in Table 1. Each of the test tires was tested for the low rolling resistance, the wet

grip property, the steering stability, and the wear resistance. The results are shown in Table 1.

Common specifications are as follows.
Tread ground contacting width = 142 mm
Groove width Wgc of Crown circumferential main groove = 8.8 mm
groove width Wgs of shoulder circumferential main groove = 10.4 mm

Table 2 shows compositions of rubbers A to F used as the tread rubber. chemicals listed in Table 2 are as follows.
SBR1: modified SBR available from Sumitomo Chemical Co., Ltd. (modified S-SBR having a terminal modified by compound expressed by the chemical formula (I) ($R^{11}$ = methoxy group, $R^{12}$ = methoxy group, $R^{13}$ = methoxy group, $R^{14}$ = ethyl group, $R^{15}$ = ethyl group, and n = 3), styrene content of 25 mass%, vinyl content of 57 mass%, and Tg of -25 degrees Celsius))
SBR2: Nipol 1502 available from Zeon Corporation (non-modified SBR, styrene content of 24.5 mass%, vinyl content of 15.1 mass%, and Tg of -52 degrees Celsius)
BR: ubepol BR150B (cis content of 96 mass%) available from ube Industries, Ltd.
Silica: Ultrasil VN3 (N2SA of 175 $m^2/g$) available from Evonik Degussa GmbH
Carbon black: Dia Black N220 (ISAF, N2SA of 114 $m^2/g$) available from Mitsubishi Chemical Corporation
Aluminum hydroxide: Apyral200SM (with an average particle size of 0.6 $\mu$m) available from Nabaltec
silane coupling agent: NXT (3-octanoylthio-1-propyltriethoxysilane) available from Momentive Performance Materials Inc.
Oil: X-140 available from Japan Energy Corporation
Resin: SYLVARES SA85 (copolymer of $\alpha$-methylstyrene and styrene (aromatic vinyl polymer), softening point of 85 degrees Celsius, and Mw of 1000) available from Arizona Chemical Ltd.
Wax: Sunnoc N available from Ouchi Shinko Chemical Industrial Co., Ltd.
Anti-aging agent 1: Nocrac 6C (N-(1,3-dimethylbutyl)-N'-phenyl-p-phenylenediamine) available from Ouchi Shinko Chemical Industrial Co., Ltd.
Anti-aging agent 2: Nocrac 224 (2,2,4-trimethyl-1,2-dihydroquinoline polymer) available from Ouchi Shinko Chemical Industrial Co., Ltd.
Stearic acid: Stearic acid "Tsubaki" available from Nof corporation
zinc oxide: Two kinds of zinc oxides available from Mitsui Mining & smelting Co., Ltd.
Sulfur: Powdered sulfur available from Tsurumi chemical Industry Co., Ltd.
Vulcanization accelerator 1: Nocceler NS (N-tert-butyl-2-benzothiazolylsulfenicamide) available from Ouchi Shinko Chemical Industrial Co., Ltd.
vulcanization accelerator 2: Soxinol D (diphenylguanidine) available from Sumitomo Chemical Co., Ltd.

(1) Low rolling resistance

The test tires were mounted on a rim (15x6JJ), inflated to 230 kPa, and loaded with 3.43 kN of tire load, and then rolling resistance of the test tires was measured by using a rolling resistance testing machine at a speed of 80 km/h. The results are indicated by an index wherein the larger the index, the better the low rolling resistance is. Note that the indexes are expressed by the following expression:

Low rolling resistance = (the low rolling resistance of the tire as Reference 1)/(the low rolling resistance of the tire other than Reference 1) × 100

(2) Wet grip property

The test tires were mounted on rims (15 × 6JJ) on all wheels of a test car (Japanese front wheel drive vehicle with a displacement of 2000 cc) and inflated to 230 kPa, and then braking distance on a wet asphalt road at a speed of 100 km/h was measured. The wet grip property is indicated by an index wherein the larger the index is, the better the wet grip property is. The indexes are expressed by the following expression:

$$\text{Wet grip property} = (\text{the braking distance of the tire as Reference 1})/(\text{the braking distance of the tire other than Reference 1}) \times 100$$

(3) Steering stability

The test tires were mounted on the rims (15 × 6JJ) on all wheels of the test car (Japanese front wheel drive vehicle with a displacement of 2000 cc) and inflated to 230 kPa. Then the test car was driven on a test course and the steering stability was evaluated by the driver's feeling during driving the car in a zigzag. The results are indicated by an index based on the steering stability of the Reference 1 being 100, wherein the larger the index is, the better the steering stability is.

(3) Wear resistance

The test tires were mounted on the rims (15 × 6JJ) on all wheels of the test car (Japanese front wheel drive vehicle with a displacement of 2000 cc) and inflated to 230 kPa. And the test car was driven for 35,000 km, and then the wear amount was determined by measuring the depths of the circumferential main grooves. The results are indicated by an index wherein the larger the index, the better the wear resistance is. Note that the indexes are expressed by the following expression:

$$\text{Wear resistance} = (\text{the wear amount of the tire of Reference 1})/(\text{the wear amount of the tire other than Reference 1}) \times 100$$

Table 1. (1/2)

| | Ref. 1 | Ref. 2 | Ex. 1 | Ex. 2 | Ex. 3 | Ex. 4 | Ref. 3 | Ref. 4 |
|---|---|---|---|---|---|---|---|---|
| Crown circumferential main groove | | | | | | | | |
| ·Groove depth Hgc [mm] | 6.3 | | | | | 6.0 | 7.4 | |
| Shoulder circumferential main grooves | | | | | | | | |
| ·Groove depths Hgs [mm] | 6.0 | | | | | | 7.4 | |
| Groove depths of shoulder lateral grooves | | | | | | | | |
| ·Hymax at Deepest portions [mm] | 5.0 | | | | | | | |
| (Hymax/Hgc) | (0.8) | | | | | | (0.68) | |
| ·Hye at Ground contacting edge [mm] | 4.2 | | | | | | | |
| (Hye/Hgc) | (0.67) | | | | | (0.7) | (0.57) | |
| Land ratio | | | | | | | | |
| ·Land ratio L of entire tread surface L | 78% | | | | | | | |
| ·Land ratio Ls of Shoulder region | 70% | | | | | | | |
| ·Land ratio Lc of Crown region | 85% | | | | | | | |
| Difference (Ls - Lc) | 15% | | | | | | | |
| Tread rubber | Rubber A | Rubber B | Rubber C | Rubber D | Rubber E | Rubber C | Rubber C | Rubber F |
| ·tanδ0 | 0.48 | 0.52 | 0.75 | 0.71 | 0.6 | 0.75 | 0.75 | 0.25 |
| ·tanδ30 | 0.185 | 0.19 | 0.14 | 0.125 | 0.16 | 0.14 | 0.14 | 0.07 |
| ·tanδ0/tanδ30 | 2.5 | 2.74 | 5.36 | 5.68 | 3.75 | 5.36 | 5.36 | 3.57 |
| ·Hs | 62 | 63 | 60 | 60 | 61 | 60 | 60 | 60 |
| | | | | | | | | |
| Low rolling resistance | 100 | 98 | 110 | 115 | 107 | 110 | 98 | 110 |
| Wet grip property | 100 | 102 | 112 | 109 | 107 | 112 | 112 | 105 |
| Steering stability | 100 | 103 | 110 | 108 | 105 | 110 | 108 | 95 |
| Wear resistance | 100 | 92 | 110 | 113 | 110 | 110 | 115 | 90 |

Table 1. (2/2)

| | Ex. 5 | Ex. 6 | Ex. 7 | Ex. 8 | Ref. 5 | Ref. 6 |
|---|---|---|---|---|---|---|
| Crown circumferential main groove | | | | | | |
| ·Groove depth Hgc [mm] | 6.3 | | | | | |
| Shoulder circumferential main grooves | | | | | | |
| ·Groove depths Hgs [mm] | 6.0 | | | | | |
| Groove depths of shoulder lateral grooves | | | | | | |
| ·Hymax at Deepest portions [mm] | 4.7 | 5.7 | 5 | 5 | 5 | 5 |
| (Hymax/Hgc) | (0.75) | (0.9) | (0.8) | (0.8) | (0.8) | (0.8) |
| ·Hye at Ground contacting edge [mm] | 4.2 | 4.2 | 4.0 | 5.3 | 4.2 | 4.2 |
| (Hye/Hgc) | (0.67) | (0.67) | (0.63) | (0.84) | (0.67) | (0.67) |
| Land ratio | | | | | | |
| ·Land ratio L of entire tread surface L | 78% | | | | 78% | 70% |
| ·Land ratio Ls of Shoulder region | 70% | | | | 78% | 70% |
| ·Land ratio Lc of Crown region | 85% | | | | 78% | 70% |
| Difference (Ls - Lc) | 15% | | | | 0% | 0% |
| Tread rubber | Rubber C | | | | | |
| ·tanδ0 | 0.75 | | | | | |
| ·tanδ30 | 0.14 | | | | | |
| ·tanδ0/tanδ30 | 5.36 | | | | | |
| ·Hs | 60 | | | | | |
| | | | | | | |
| Low rolling resistance | 110 | 110 | 110 | 110 | 110 | 110 |
| Wet grip property | 112 | 112 | 112 | 112 | 112 | 114 |
| Steering stability | 112 | 108 | 112 | 108 | 106 | 100 |
| Wear resistance | 108 | 110 | 108 | 110 | 105 | 98 |

Table 2.

| | | Rubber A | Rubber B | Rubber C | Rubber D | Rubber E | Rubber F | |
|---|---|---|---|---|---|---|---|---|
| Ingredients (parts by weight) | SRB1 | - | - | 85 | 80 | 70 | 40 | |
| | SBR2 | 85 | 100 | - | - | - | - | |
| | BR | 15 | - | 15 | 20 | 30 | 60 | |
| | silica | 70 | 70 | 55 | 50 | 65 | 30 | |
| | Carbon black | 5 | 5 | 5 | 5 | 5 | 5 | |
| | Aluminum hydroxide | - | - | 15 | 10 | 15 | - | |
| | Silane coupling agent | 7 | 7 | 5.5 | 5 | 6.5 | 3 | |
| | Oil | 20 | 20 | 15 | 10 | 25 | - | |
| | Resin | 5 | - | 10 | 7.5 | 10 | - | |
| | Wax | 2 | 2 | 2 | 2 | 2 | 2 | |
| | Anti-aging agent 1 | 2.5 | 2.5 | 2.5 | 2.5 | 2.5 | 2.5 | |
| | Anti-aging agent 2 | 1 | 1 | 1 | 1 | 1 | 1 | |
| | Stearic acid | 1.5 | 1.5 | 2 | 2 | 2 | 2 | |
| | Zinc oxide | 2.5 | 2.5 | 2.5 | 2.5 | 2.5 | 2.5 | |
| | Sulfur | 1.5 | 1.5 | 1.5 | 1.5 | 1.5 | 2.5 | |
| | vulcanization accelerator 1 | 1.5 | 1.5 | 1.5 | 1.5 | 1.5 | 2.5 | |
| | vulcanization accelerator 2 | 2.5 | 2.5 | 2.5 | 2.5 | 2.5 | 2.5 | |
| Rubber physical properties | tan δ 0 | 0.48 | 0.52 | 0.75 | 0.71 | 0.6 | 0.25 | |
| | tan δ 30 | 0.185 | 0.190 | 0.140 | 0.125 | 0.16 | 0.07 | |
| | tan δ 0/tan δ 30 | 2.59 | 2.74 | 5.36 | 5.68 | 3.75 | 3.57 | |
| | HS | 62 | 63 | 60 | 60 | 61 | 60 | |
| | E* 30/tan δ 30 | 27.57 | 27.89 | 34.29 | 35.20 | 32.5 | 45.71 | |
| | E*30 | 5.1 | 5.3 | 4.8 | 4.4 | 5.2 | 3.2 | |
| | EB | 575 | 560 | 650 | 675 | 625 | 480 | |
| | TB×EB | 11000 | 10000 | 16000 | 13500 | 15500 | 8500 | |

As shown in Table 1, it is confirmed that the rolling resistance, the wet grip property, and the wear resistance of the tires as the Examples were improved in a good balance.

Reference signs List

| | |
|---|---|
| 1 | pneumatic tire |
| 2 | tread portion |
| 2G | tread rubber |
| 3 | circumferential groove |

| | |
|---|---|
| 3S | shoulder circumferential groove |
| 4 | land region |
| 4S | shoulder land region |
| 5 | shoulder lateral groove |
| 7 | shoulder sipe |
| 8, 10, 11 | sipe |
| Te | tread ground contact edge |
| Ts | tread surface |
| Yc | crown region |
| Ys | shoulder region |

## Claims

1. A pneumatic tire (1) comprising:

   a tread portion (2) comprising at least three circumferential main grooves (3) extending in a tire circumferential direction, at least four land regions (4) divided by the circumferential main grooves (3) and including a pair of shoulder land regions (4S) disposed on outermost sides in a tire axial direction, the shoulder land regions (4S) being provided with a plurality of shoulder lateral grooves (5) extending laterally;
   the circumferential main grooves (3) having a groove depth (Hg) not greater than 6.3 mm;
   **characterised in that** the shoulder lateral grooves (5) have deepest portions with a maximum groove depth at axially inner end portions thereof, a groove depth (Hymax) of the deepest portions being in a range of from 75% to 90% of the groove depth (Hg) of the circumferential main grooves (3) and a groove depth (Hye) of the shoulder lateral grooves (5) at a tread ground contacting edge (Te) being in a range of from 63% to 85% of the groove depth (Hg);
   when a tread surface is divided into a pair of shoulder regions (Ys) located axially outside and a crown region (Yc) located therebetween by a pair of the circumferential main grooves (3) disposed on the axially outermost sides, the shoulder regions (Ys) have a land ratio (Ls) being a ratio of a virtual ground contacting area of the tread portion (2) having no groove and an actual ground contacting area of the tread portion (2) having the grooves, which is smaller than a land ratio (Lc) of the crown region (Yc); and
   the tread surface is formed of a tread rubber (2G) in which a ratio $\tan\delta 0/\tan\delta 30$ between $\tan\delta 0$ at 0 degree Celsius and $\tan\delta 30$ at 30 degrees Celsius is not less than 3.75.

2. The pneumatic tire (1) according to claim 1, wherein
   the land regions (4) disposed axially inside the shoulder land regions (4S) are provided with no groove having a groove width not less than 1.5 mm but with a sipe having a width smaller than 1.5 mm.

3. The pneumatic tire (1) according to claim 1 or 2, wherein
   when mounted on a vehicle, the shoulder land region (4S) located on an axially outer side of the vehicle is provided with a shoulder sipe (7) extending between the shoulder lateral grooves (5) adjacent to each other in the tire circumferential direction, and
   an adjacent one of the land regions (4) to the shoulder land region (4S) is provided with a sipe extending on an extended line of the shoulder sipe (7).

4. The pneumatic tire (1) according to any one of claims 1 to 3, wherein
   the axially inner end portions of the shoulder lateral grooves (5) terminate within the shoulder land regions (4S).

5. The pneumatic tire (1) according to any one of claims 1 to 4, wherein
   the land ratio (Lc) is not less than 85%,
   a difference (Lc - Ls) between the land ratio (Lc) and the land ratio (Ls) is not less than 10%, and
   a land ratio of the entire tread surface is not less than 70%.

6. The pneumatic tire (1) according to any one of claims 1 to 5, wherein
   the tread rubber (2G) has a rubber hardness (Hs) in a range of from 57 to 67, wherein the rubber hardness is the type-A durometer hardness measured at 23 degrees Celsius.

## Patentansprüche

1. **1.** Luftreifen (1), der Folgendes aufweist:

einen Laufflächenabschnitt (2), der zumindest drei Umfangshauptnuten (3), die sich in einer Reifenumfangsrichtung erstrecken, und zumindest vier Erhebungsbereiche (4) aufweist, die durch die Umfangshauptnuten (3) unterteilt sind und ein Paar von Schultererhebungsbereichen (4S) aufweisen, die an äußersten Seiten in einer Reifenaxialrichtung angeordnet sind, wobei die Schultererhebungsbereiche (4S) mit einer Vielzahl von Schulterlateralnuten (5) versehen sind, die sich lateral erstrecken;
wobei die Umfangshauptnuten (3) eine Nuttiefe (Hg) von nicht größer als 6,3 mm haben;
**dadurch gekennzeichnet, dass**
die Schulterlateralnuten (5) tiefste Abschnitte mit einer maximalen Nuttiefe an axial inneren Abschnitten von diesen haben, wobei eine Nuttiefe (Hymax) der tiefsten Abschnitte in einem Bereich von 75 % bis 90 % der Nuttiefe (Hg) der Umfangshauptnuten (3) ist und eine Nuttiefe (Hye) der Schulterlateralnuten (5) an einem Laufflächenbodenkontaktrand (Te) in einem Bereich von 63 % bis 85 % der Nuttiefe (Hg) ist;
dann, wenn eine Laufflächenoberfläche in ein Paar von Schulterbereichen (Ys), die sich axial auswärts befinden, und einen Kronenbereich (Yc), der sich dazwischen befindet, durch ein Paar von den Umfangshauptnuten (3) aufgeteilt ist, die auf den axial äußersten Seiten angeordnet sind, die Schulterbereiche (Ys) ein Erhebungsverhältnis (Ls) haben, das ein Verhältnis eines virtuellen Bodenkontaktbereichs des Laufflächenabschnitts (2) mit keiner Nut und einem tatsächlichen Bodenkontaktbereich des Laufflächenabschnitts (2) mit den Nuten ist, das kleiner als ein Erhebungsverhältnis (Lc) des Kronenbereichs (Yc) ist; und
die Laufflächenoberfläche aus einem Laufflächengummi (2G) ausgebildet ist, in dem ein Verhältnis $\tan\delta 0/\tan\delta 30$ zwischen $\tan\delta 0$ bei 0°C und $\tan\delta 30$ bei 30°C nicht kleiner als 3,75 ist.

2. **2.** Luftreifen (1) nach Anspruch 1, wobei

die Erhebungsbereiche (4), die axial einwärts von den Schultererhebungsbereichen (4S) angeordnet sind, mit keiner Nut versehen sind, die eine Nutbreite von nicht weniger als 1,5 mm, sondern mit einer Lamelle mit einer Breite von weniger als 1,5 mm versehen sind.

3. **3.** Luftreifen (1) nach Anspruch 1 oder 2, wobei bei der Montage an einem Fahrzeug der auf einer axial äußeren Seite des Fahrzeugs befindliche Schultererhebungsbereich (4S) mit einer Schulterlamelle (7) versehen ist, die sich zwischen den Schulterlateralnuten (5) benachbart zueinander in der Reifenumfangsrichtung erstreckt, und

ein benachbarter von den Erhebungsbereichen (4) zu dem Schultererhebungsbereich (4S) mit einer Lamelle versehen ist, die sich auf einer Verlängerungslinie der Schulterlamelle (7) erstreckt.

4. **4.** Luftreifen (1) nach einem von Ansprüchen 1 bis 3, wobei

die axial inneren Endabschnitte der Schulterlateralnuten (5) mit den Schultererhebungsbereichen (4S) enden.

5. **5.** Luftreifen (1) nach einem von Ansprüchen 1 bis 4, wobei

das Erhebungsverhältnis (Lc) nicht geringer als 85 % ist,
eine Differenz (Lc - Ls) zwischen dem Erhebungsverhältnis (Lc) und dem Erhebungsverhältnis (Ls) nicht geringer als 10 % ist, und
ein Erhebungsverhältnis der gesamten Laufflächenoberfläche nicht geringer als 70 % ist.

6. **6.** Luftreifen (1) nach einem von Ansprüchen 1 bis 5, wobei

der Laufflächengummi (2G) eine Gummihärte (Hs) in einem Bereich von 57 bis 67 hat, wobei die Gummihärte die Typ-A-Durometerhärte ist, die bei 23°C gemessen ist.

## Revendications

1. **1.** Pneumatique (1) comprenant :

une portion de bande de roulement (2) comprenant au moins trois rainures principales circonférentielles (3) s'étendant dans une direction circonférentielle de pneu, au moins quatre régions de plein/creux (4) divisées par les rainures principales circonférentielles (3) et incluant une paire de régions de plein/creux d'épaulement (4S) disposées sur les côtés les plus externes dans une direction axiale de pneu, les régions de plein/creux d'épaulement (4S) étant munies de plusieurs rainures latérales d'épaulement (5) s'étendant latéralement ;
les rainures principales circonférentielles (3) ayant une profondeur de rainure (Hg) qui n'est pas supérieure à 6,3 mm ;
**caractérisé en ce que** les rainures latérales d'épaulement (5) présentent les portions les plus profondes avec une profondeur de rainure maximale aux portions d'extrémité axialement internes de celles-ci, une profondeur de rainure (Hymax) des portions les plus profondes se trouvant dans un intervalle de 75 % à 90 % de la profondeur de rainure (Hg) des rainures principales circonférentielles (3) et une profondeur de rainure (Hye) des rainures latérales d'épaulement (5) sur un bord de contact avec le sol de la bande de roulement (Te) étant dans un intervalle de 63 % à 85 % de la profondeur de rainure (Hg) ;
lorsqu'une surface de bande de roulement est divisée en une paire de régions d'épaulement (Ys) disposées axialement à l'extérieur et une région de couronne (Yc) disposée entre celles-ci par une paire des rainures principales circonférentielles (3) disposées sur les côtés axialement les plus externes, les régions d'épaulement (Ys) présentent un rapport plein/creux (Ls) étant un rapport d'une surface de contact avec le sol virtuelle de la portion de bande de roulement (2) présentant aucune rainure et une surface de contact avec le sol réelle de la portion de bande de roulement (2) présentant les rainures, lequel est inférieur à un rapport plein/creux (Lc) de la région de couronne (Yc) ; et
la surface de bande de roulement est formée d'un caoutchouc de bande de roulement (2G) dans lequel un rapport $\tan\delta 0/\tan\delta 30$ entre $\tan\delta 0$ à 0 degré Celsius et $\tan\delta 30$ à 30 degrés Celsius n'est pas inférieur à 3,75.

2. Pneumatique (1) selon la revendication 1, dans lequel
les régions de plein/creux (4) disposées axialement à l'intérieur des régions de plein/creux d'épaulement (4S) sont fournies avec aucune rainure présentant une largeur de rainure qui n'est pas inférieure à 1,5 mm mais avec une lamelle présentant une largeur inférieure à 1,5 mm.

3. Pneumatique (1) selon la revendication 1 ou 2, dans lequel
lorsqu'il est monté sur un véhicule, la région de plein/creux d'épaulement (4S) disposée sur un côté axialement externe du véhicule est munie d'une lamelle d'épaulement (7) s'étendant entre les rainures latérales d'épaulement (5) adjacentes les unes aux autres dans la direction circonférentielle de pneu, et
une adjacente des régions de plein/creux (4) par rapport à la région de plein/creux d'épaulement (4S) est munie d'une lamelle s'étendant sur une ligne étendue de la lamelle d'épaulement (7).

4. Pneumatique (1) selon l'une quelconque des revendications 1 à 3, dans lequel
les portions d'extrémité axialement internes des rainures latérales d'épaulement (5) se terminent dans les régions de plein/creux d'épaulement (4S).

5. Pneumatique (1) selon l'une quelconque des revendications 1 à 4, dans lequel
le rapport plein/creux (Lc) n'est pas inférieur à 85 %,
une différence (Lc - Ls) entre le rapport plein/creux (Lc) et le rapport plein/creux (Ls) n'est pas inférieure à 10 %, et un rapport plein/creux de la surface entière de bande de roulement n'est pas inférieur à 70 %.

6. Pneumatique (1) selon l'une quelconque des revendications 1 à 5, dans lequel
le caoutchouc de bande de roulement (2G) présente une dureté de caoutchouc (Hs) dans un intervalle de 57 à 67, dans lequel la dureté de caoutchouc est la dureté au duromètre de type A mesurée à 23 degrés Celsius.

FIG.1

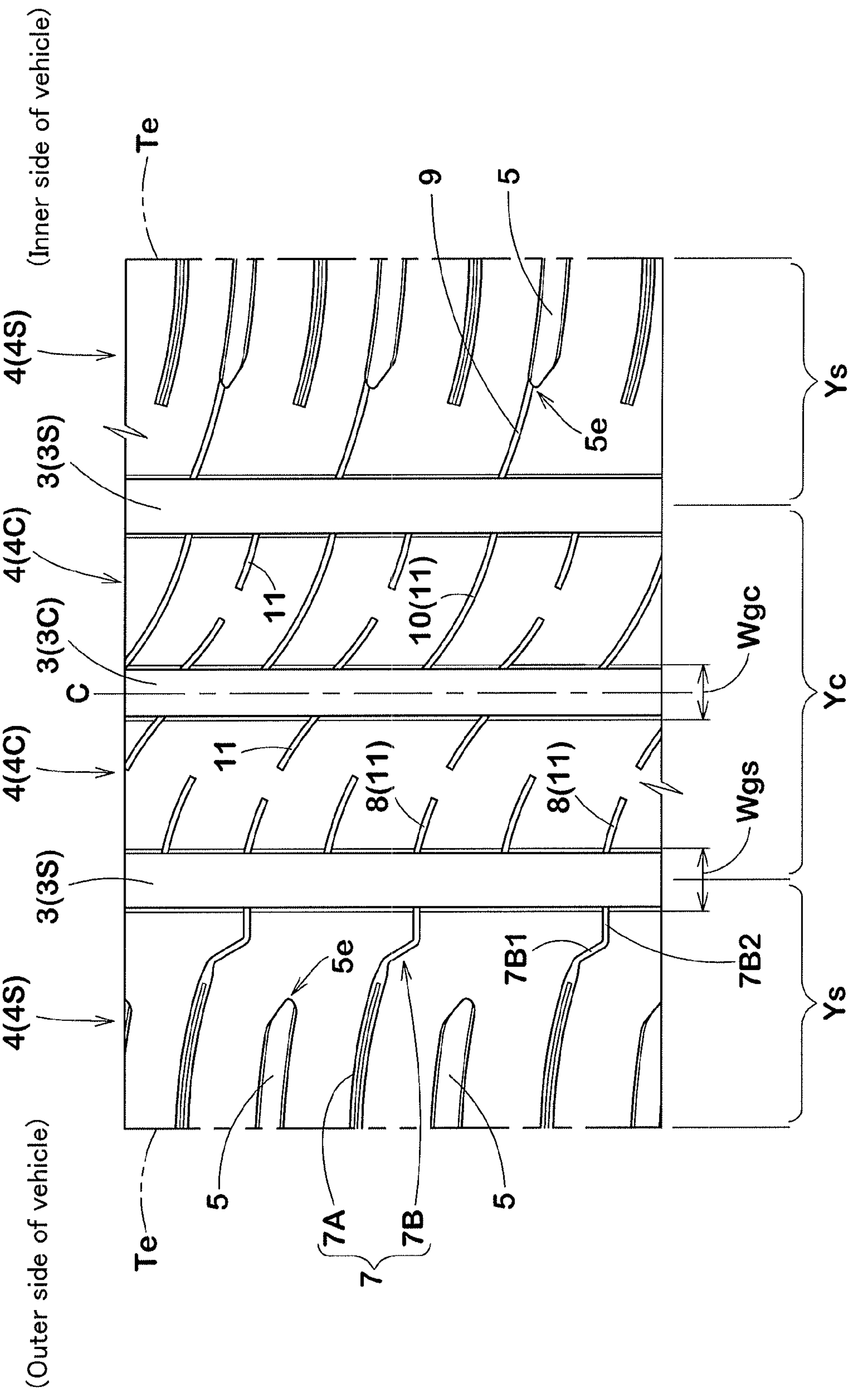
(Inner side of vehicle)
(Outer side of vehicle)
Te
Te
4(4S)
3(3S)
4(4C)
3(3C)
C
4(4C)
3(3S)
4(4S)
9
5
5e
11
10(11)
Wgc
11
8(11)
8(11)
Wgs
5e
7B1
7B2
5
7A
7B
5
7
Ys
Yc
Ys

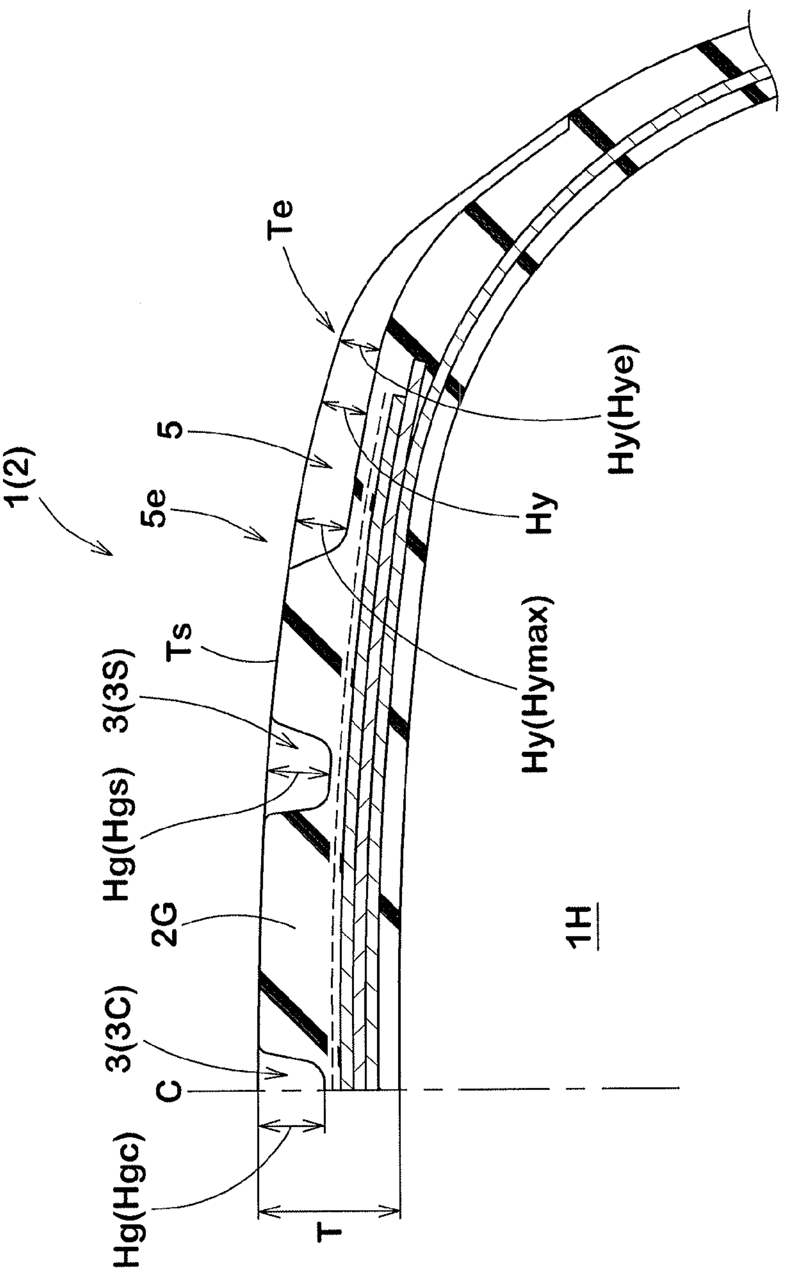


FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015157600 A
- JP H1180433 B
- JP H1180433 A
- US 2008196806 A1
- JP 2010111753 A
- JP H653768 B
- JP H657767 B
- JP 2003514078 A